# EUROPEAN PATENT APPLICATION

(11) **EP 3 533 537 A1**
(43) Date of publication of application: **04.09.2019**
(21) Application number: 18159334.4
(22) Date of filing: 28.02.2018
(51) Int. Cl.: B22F 3/00, B23K 10/02, B33Y 10/00, B33Y 30/00, B33Y 40/00, B29C 64/118, B29C 64/188

(54) **METAL 3D PRINTING WITH LOCAL PRE-HEATING**

(71) Applicant: Valcun bvba, 9041 Oostakker (BE)
(72) Inventor: GALLE, Jonas, 9041 Oostakker (BE)
(74) Representative: DenK iP

(57) **Abstract**

A device for additive manufacturing is presented, including means for extruding material in flowable state, for depositing an extruded product on an underlying body, and at least one plasma source for providing at least one plasma jet to a region of the underlying body. The plasma provides a pre-heated region in said body. The device is arranged so the at least one plasma source provides the plasma jet only to the region of the underlying body and the means for extruding material is adapted for depositing an extruded product on the pre-heated region of the underlying body, for enhancing fusion between the underlying body and the extruded product.

## Description

### Field of the invention

The present invention relates to the field of additive manufacturing. More specifically it relates to devices and methods of manufacture based on extrusion and deposition, specifically metal extrusion and deposition.

### Background of the invention

3D printing and other additive manufacturing techniques allow a great deal of freedom of design and prototyping. The leap from the design process and the manufacture can be reduced, because a product can be produced and tested, right after the design, at lower cost than if an entire industrial manufacturing process has to be set up for just the testing phase.

Additive manufacturing, fast prototyping and other techniques related to 3D printing are powerful tools for easy and fast developing, testing, and marketing for small manufacturers, researchers and entrepreneurial developers. However, in some instances it is still a costly technique. Specifically metal 3D printing is a costly technique, both in terms of hardware and in terms of materials for printing. Metal powders require high purity, and are often more expensive than unpowdered metal. Additionally, the devices are often difficult and/or dangerous to operate, requiring expertise. For example, high power lasers require careful and delicate handling, and they represent a potential hazard. The techniques also have specific problems stemming from the particular technology used. The most widely used technique for metal additive manufacturing is powder additive manufacturing, which suffers from important oxidation issues. Said technique is slow, as it needs to locally fuse metal powder, point by point, by irradiating the powder, for example with a high power laser (examples of such technique include powder bed laser sintering and laser cladding). The powders also represent a health risk if breathing powder particles suspended in the air. Moreover, some of these techniques are suboptimal for particular materials, due to their inherent properties which are incompatible with the particular technology used. For example, referring to laser-based manufacturing, if the material presents low optical absorption, the efficiency of the technique is very low. This is the case of, for example, aluminum, which has otherwise very interesting and useful properties for industry, but which is extremely difficult to process using laser-based techniques, because of its absorption coefficient lower than 20%.

Other solutions (such as metal clay) limited due to the need for extra process steps such as curing, present limited resolution and shrinkage after curing. The latter can result in excessive thermal stresses or even cracking.

It would be desirable to have a low cost solution for both the hardware as well as for the feedstock (for example, reducing the need of metal powder) that is able to provide objects with acceptable resolution and strength, in a reasonable short time.

### Summary of the invention

It is an object of embodiments of the present invention to provide an additive manufacturing technique suitable for deposition on bodies with high heat conductivity, such as metals, with good resolution, in an inexpensive and safe way, without complex setup.

In a first aspect, the present invention provides a device for additive manufacturing, the device comprising means for extruding material in flowable state, i.e. in liquid or semi-liquid state, e.g. viscous matter, for depositing an extruded product on an underlying body, and at least one plasma source for providing at least one plasma jet to a target region of the underlying body, for obtaining a pre-heated region, wherein the device is arranged so the at least one plasma source provides the at least one plasma jet, preferably only, to the target region of the underlying body and the means for extruding material is adapted for depositing an extruded product on the pre-heated region of the underlying body, for enhancing fusion between the underlying body and the extruded product.

It is an advantage of embodiments of the present invention that the fusion zone may have similar size (e.g. area) as for example the cross section of the extruded product, thus improves printing resolution (e.g. lateral resolution) by reducing the size of the melting pool, or even removing it completely, while still forming a fused joint.

In embodiments of the present invention the plasma source is a focused plasma jet source for providing a focused plasma jet.

It is an advantage of embodiments of the present invention that the pre-heated region can be accurately defined and positioned on the underlying body.

In embodiments of the present invention, the device further comprises a reservoir including heating means, for melting material for extrusion.

It is an advantage of embodiments of the present invention that the device can use metal in any form, such as powder, wire, scrap metal, slab, etc.

In embodiments of the present invention, the means for extruding material is adapted to deposit the extruded product on a region physically separated from the region where at least one plasma source provides the plasma jet, the device further including a motion system for providing the pre-heated region to a location where the means for extruding material deposits the extruded product.

In embodiments of the present invention, the device further includes control means for controlling at least one plasma source for regulating the temperature of the pre-heated region provided by the at least one plasma jet.

It is an advantage of embodiments of the present invention that the plasma jet can be controlled in order to maintain a constant average temperature of the preheated region at or below the melting temperature of the underlying body. It is an advantage that the average temperature of the pre-heated zone may be maintained constant at the moment of deposition.

In embodiments of the present invention, the device further comprises a sensing means for measuring a parameter related to the fusion energy, such as means for measuring parameters related to the temperature, and the control means further comprises a feedback loop for controlling the plasma jet source for adapting at least the temperature of the pre-heated region, based on the measurement of the sensing means.

It is an advantage of embodiments of the present invention that the fusion process can be monitored, for example by monitoring the temperature and heat dissipation; for example melting can be detected if temperature becomes constant during heating.

In some embodiments including controlling means, the controlling means further includes an algorithm for controlling the plasma source, based at least on two of:
- the relation between the amount and distribution of voxels in the volume neighboring the fusion zone,
- the value of the melting temperature of the material, and
- the object build rate,
for limiting the pre-heated region to an area similar to the contact area between the extruded product and the underlying body.

It is an advantage of embodiments of the present invention that the plasma jet can be automatically controlled in order to avoid excess heat transfer and to reduce excessive melting of the underlying metal.

In a second aspect, the present invention provides a method of performing additive manufacturing comprising the steps of:
extruding material in a flowable, i.e. liquid or semi-liquid, e.g. viscous, state, thereby forming an extruded product,
providing at least one plasma jet on a target region of an underlying body, thus forming a pre-heated region on the underlying body,
depositing the extruded product on the pre-heated region of the underlying body, thereby fusing the extruded product with the underlying body,
wherein providing at least one plasma jet comprises removing the plasma jet from the pre-heated region before depositing the extruded product, for enhancing fusion between the underlying body and the extruded product.

It is an advantage of embodiments of the present invention that the jet is adapted for locally raising the temperature of the underlying body so as to improve the joint between the underlying body and the extruded product, by reducing the temperature difference between the extruded product and the underlying body, thus compensating for heat losses through the underlying body.

In embodiments of the present invention, providing at least one plasma jet comprises contacting the electrodes of a plasma source, forming a plasma arc, by separating the electrodes, thereby forming a plasma jet. The variable distance and current between the electrodes can be used for controlling the plasma power.

It is an advantage of embodiments of the present invention that the jet can be provided with relatively small energy and its positioning and energy can be improved, as well as higher protection for the gun and body can be provided. Specifically, a smaller gas breakdown voltage is required than in some prior art systems.

In embodiments of the present invention, providing at least one plasma jet on a region of an underlying body comprises providing at least one plasma jet, for locally raising the temperature of the underlying body at the pre-heated region to an average temperature close to or up to the melting temperature of the material of the underlying body. It is an advantage of embodiments of the present invention that the jet is adapted for locally raising the temperature of the underlying body in a region of substantially the same area as for example the cross section of the extruded product. The average temperature is raised to a value not surpassing the melting temperature of the underlying body, but close to it, so the fusion zone can be of the same order as the contact area between the extruded product and the underlying body, by reducing the size of a melt pool, for example by providing a melt pool with a width smaller than the required lateral resolution, or by avoiding the presence of a melt pool on the body.

In embodiments of the present invention, a parameter related to the fusion energy is measured on the underlying body, for example at the pre-heated region, and controlling at least the plasma jet is performed taking into account the results of the measurement at the pre-heated region, for maintaining the average temperature of the pre-heated region at a temperature sufficient to allow fusion after deposition of the extruded material.

It is an advantage of embodiments of the present invention that the heat transfer and dissipation can be monitored for providing a high temperature in the fusion zone, while avoiding excessive melting of the underlying body, by controlling the current, power and/or electrode distance of at least one plasma jet source.

In embodiments of the present invention, the method further comprises obtaining voxel and geometric information of the underlying body, e.g. from a software file, obtaining information regarding the melting temperature of the underlying body and the temperature of the filament, and controlling the plasma jet thereby adapting the heat transfer taking into account the voxel and geometric information of the underlying body, for maintaining the average temperature of the pre-heated region at or below the melting temperature for reducing the melt pool to a width comparable or smaller than the required lateral resolution, or avoiding the presence of a melt pool at all.

It is an advantage of embodiments of the present invention that the heat transfer can be controlled, for controlling the size and temperature of the fusion zone taking into account 3D model information, thereby providing a predictive algorithm.

In embodiments of the present invention, extruding material comprises extruding aluminium thereby providing an aluminium extruded product.

It is an advantage of embodiments of the present invention that optical absorbance of aluminium does not have a negative impact on the additive manufacturing process or on the quality of products obtained thereof.

In embodiments of the present invention, providing at least one plasma jet comprises providing a plasma jet thereby forming the pre-heated zone, preceding depositing the extruded product on the pre-heated zone. In particular, continuous relative movement can be provided between the underlying body and the plasma jet

It is an advantage of embodiments of the present invention that a homogeneous and regular fusion zone can be obtained.

Particular and preferred aspects of the invention are set out in the accompanying independent and dependent claims. Features from the dependent claims may be combined with features of the independent claims and with features of other dependent claims as appropriate and not merely as explicitly set out in the claims.

These and other aspects of the invention will be apparent from and elucidated with reference to the embodiment(s) described hereinafter.

### Brief description of the drawings

FIG 1 illustrates an additive manufacturing device in accordance with embodiments of the present invention.
FIG 2 and FIG 3 illustrate alternative embodiments of a plasma gun, applicable to embodiments of the present invention.
FIG 4 illustrates an additive manufacturing device in accordance with embodiments of the present invention, including a control unit for controlling the plasma source.
FIG 5 illustrates an additive manufacturing device in accordance with embodiments of the present invention, including a control unit for controlling the plasma source, temperature sensing means and a mill system.
FIG 6 shows a diagram representing a process in accordance with embodiments of the present invention.
FIG 7, FIG 8 and FIG 9 show diagrams representing parts of a process in accordance with embodiments of the present invention.
FIG 10 illustrates extrusion of extruded material on a melt pool which is wider than a corresponding dimension of the extruded material, while FIG 11 illustrates extrusion of extruded material on a melt pool which is smaller than a corresponding dimension of the extruded material.
FIG 12 illustrates deposited extruded product joint to an underlying body.

The drawings are only schematic and are non-limiting. In the drawings, the size of some of the elements may be exaggerated and not drawn on scale for illustrative purposes.

Any reference signs in the claims shall not be construed as limiting the scope.

In the different drawings, the same reference signs refer to the same or analogous elements.

### Detailed description of illustrative embodiments

The present invention will be described with respect to particular embodiments and with reference to certain drawings but the invention is not limited thereto but only by the claims. The dimensions and the relative dimensions do not correspond to actual reductions to practice of the invention.

The terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practiced without these specific details. In other instances, well-known methods, structures and techniques have not been shown in detail in order not to obscure an understanding of this description.

Where in embodiments of the present invention reference is made to "fusion zone", reference is made to an area of a body where deposited material contacts it, fusing together, thereby making a joint. The fusion is obtained when two objects are joined with at least a predetermined strength. This may occur, depending on the type of material, application, etc. at a temperature between liquidus temperature (temperature at which the whole material is liquid) and solidus temperature (temperature at which the whole material is solid). Fusion may occur under melting temperature.

Where in embodiments of the present invention reference is made to "average temperature" of a region, reference is made to the average of the temperatures over the area of the region. For example, if the average temperature of a 2 mm² region is 650°C, half of the region may be at a higher temperature, whereas the other half may be at a lower temperature.

The present invention relates to techniques of additive manufacturing and devices used therefor, in particular for instance additive manufacturing of metal, by a special implementation of fused deposition. Where in embodiments of the present invention reference is made to "metal", reference is made to pure metal, metal mixtures, alloys or metallic compounds. Although the disclosure refers mainly to additive manufacturing of metal, the present invention is not limited thereto, and it could be applied to polymers, ceramics, combinations and metal mixtures thereof, etc.

Where in the context of the present invention "molten material" or "fluid material" is mentioned, reference is made to material in a state at or above the melting temperature. Where reference is made to "semi-molten material" or "semi-fluid material", reference is made to material below the melting temperature, such that it is at least partially solidified, but still easily deformable and flexible.

Many techniques of additive manufacturing and rapid prototyping exist in the field. For example, fused filament deposition (FFD) is a very popular and fast technique based on the formation of a multi-layered object by deposition of extruded material.

FFD comprises providing extruded material, which is deposited in a layered series of two-dimensional patterns, thus forming a tridimensional object. The layered extruded material should fuse and join together in order to obtain at least acceptable values of strength in the object. While fused filament fabrication and deposition is widely used in 3D printing of polymers, it is less used in combination with metal. Common techniques of metal 3D printing usually include laser heating, combined with sintering and/or cladding. As an alternative to laser heating, electron beam melting can be used. These techniques provide objects with good resolution, and although they may provide manufactured devices and prototypes at an early stage of production and design, they are relatively slow.

In the field of additive manufacturing, resolution is a parameter that determines the surface quality of the manufactured body. The higher the resolution, the better the surface quality. Resolution is also linked to layer thickness or layer height of the manufactured body. Although resolution is usually a variable parameter which can be adjusted (e.g. reduced) to reduce manufacturing time, where in embodiments of the present invention reference is made to height resolution, reference is made to a parameter relating to the layer thickness attainable by the technique during normal operation, hence in a direction substantially normal to a surface of an underlying body onto which the extruded material is deposited. The smaller the thickness, the better the resolution. Where in embodiments of the present invention reference is made to lateral resolution, reference is made to the width of the deposited layer in a plane substantially parallel to a surface of the underlying body onto which the extruded material is deposited. The minimum width, provided by a single manufacture pass, would give maximum resolution. Additive manufacturing techniques usually aim for a high height and lateral resolution, while at the same time providing strongly bonded layers. Techniques based on laser cladding, or on fusing together powdered metal by use of lasers or electron beams, have good resolution, but they are often prohibitively expensive.

Other techniques such as arc welding are affordable and usually faster than powder-based 3D printers, but can only provide poor layering, resulting in pieces with low resolution.

The present invention solves these problems by improving and adapting FFD techniques in order to provide reliable metal FFD capable of providing objects with acceptable strength and good resolution, e.g. limited by the geometry and dimensions of the outlet or nozzle of the extruding means, or e.g. the cross-section of the extruded material.

The present invention provides, on the one hand, a pre-heated region of the piece being manufactured (or underlying body), which may include materials with high heat conductivity, for example metals, and on the other hand, deposition of extruded material at high temperature.

The pre-heated region becomes the fusion zone where the extruded product contacts the underlying body. The pre-heating compensates for heat losses through the underlying body, such as convection and radiation heat losses, and also notably conduction heat losses through the underlying body. These heat losses (especially conduction heat loss) would take place upon the material of the extruded product contacting the underlying body if no pre-heating was applied, due to the high thermal conductivity and thermal inertia of the underlying body. The heat would be lost at high speed, and fusion would be hindered, thus reducing joint quality. In the present invention, interlayer fusion can be guaranteed, even in cases of underlying body comprising or consisting of thermally conductive material such as metal, by applying pre-heating.

The pre-heated region has an area similar to the contact area between the extruded product and the underlying body, for example similar to the area of the cross-section of the extruded product. This small area of high temperature can be provided by means of a plasma, for example one or more plasma jets from at least one focused plasma jet source.

The temperature of the pre-heated region allows fusing the underlying body and the extruded product, without requiring a wide melt pool on the underlying body, which typically weakens the structure and reduces resolution. In some embodiments, no melt pool at all is present on the underlying body. Outside the pre-heated region (and outside the fusion zone), the temperature drops fast to values far below the melting temperature, depending on the thermal resistance of the underlying body (geometry, heat conductivity, inertia). In case of heat loss in all directions (XYZ), the temperature drop may be approximately proportional to the third power of the distance.

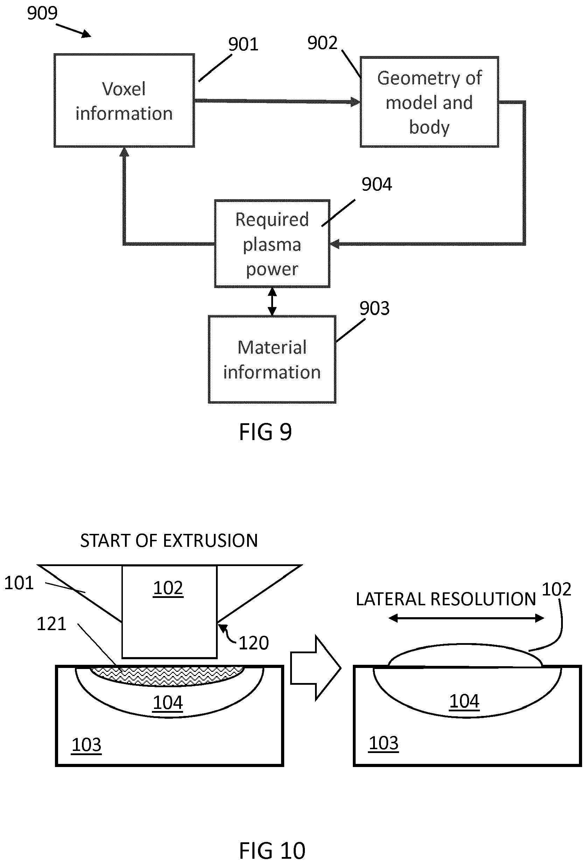

FIG 10 shows extruding means 101 (such as a die) including a nozzle or outlet 120, which produces an extruded material 102 with a diameter determined by the outlet 120; it may be the same diameter as the outlet for example. In case the extruded material is liquid, the extruded shape can be rather a blob, and the resolution / diameter is determined both by the nozzle diameter and by the distance between the nozzle and the underlying body. The leftmost drawing shows the start of extrusion, while the rightmost drawing shows the cross section of the deposited product 102. At first, the product 102 is deposited on a body 103, and in embodiments of the present invention, the underlying body 103 may include a pre-heated region 104. When there is a wide melt pool 121 (e.g. larger than the minimum required resolution (or puddle) in the pre-heated region 104, the deposited material will adapt to the size of the pool (and, as shown in the cross section view of the rightmost drawing in FIG 10, lose its integrity with a result that the lateral resolution will be much lower, and hence worse, than the pursued resolution.

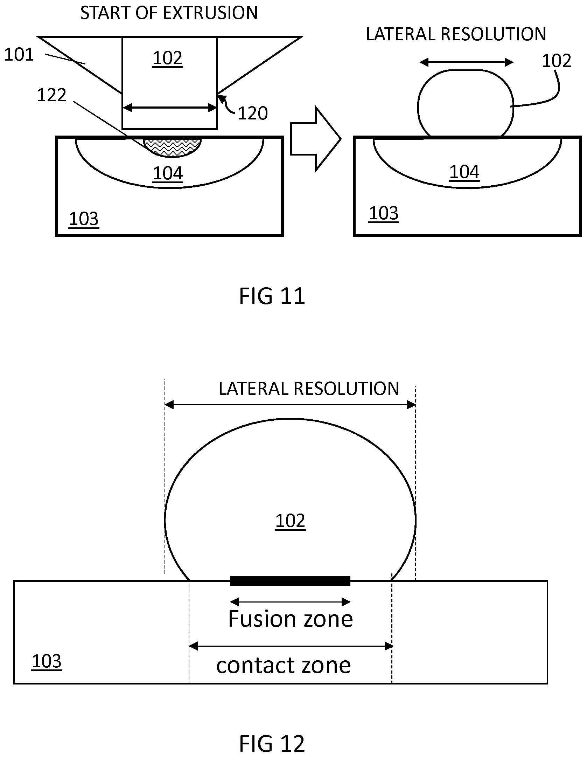

FIG 11 shows the same features as FIG 10, except that at the start of extrusion on the leftmost drawing, the melt pool 122 is smaller. When the melt pool 122 is smaller (e.g. the same size as or smaller than the required resolution), the lateral resolution is improved, and it may even be very similar or the same as the diameter of the outlet 120 of the extrusion means 101, as shown in the rightmost drawing of FIG 11. The height resolution can be manipulated by varying the size of the outlet and/or the mass flow rate of the extruded material and or distance between the nozzle 101 and underlying body 103.

However, the presence of a melt pool is optional, and its advantages will depend on factors such as required temperature for complete fusion. In some embodiments of the present invention, the deposited extruded material delivers the required fusion energy by its latent heat, in case of liquid extrusion and higher temperature, so that solidification does not occur by cooling, but rather as transfer to fusion energy for proper binding of the extruded material onto the underlying body. Hence, in some cases, creating a too big melt pool on the workpiece and depositing liquid metal would mean that solidification is realized mainly by cooling down, which is not energy efficient and limits the building speed.

Embodiments of the present invention allow providing a manufactured work piece, e.g. a metal piece, with good resolution, combined with good joint strength, while at the same time allowing automatization and high speed of the process. In some embodiments, the material being deposited and the material of the underlying body are the same (except during the deposition of the first layer, where the material is deposited on a base material which may not be the same as the material of the extruded product). In some embodiments, both are metals; for example the same metal. However, the invention is not limited thereto. For example, an underlying body (e.g. manufactured piece) may be partially formed by a first material, and the extruded product may be of a second material. The plasma jet is adapted to heat up the material of the underlying body, for reducing the temperature difference between the underlying body and the deposited extruded product.

In a first aspect, the present invention relates to a device for additive manufacturing, especially additive manufacturing of highly heat conductive materials such as metals. Where in the remainder of the description "metals" are mentioned, this is to be understood as meaning "highly heat conductive materials", which may include materials other than metals.

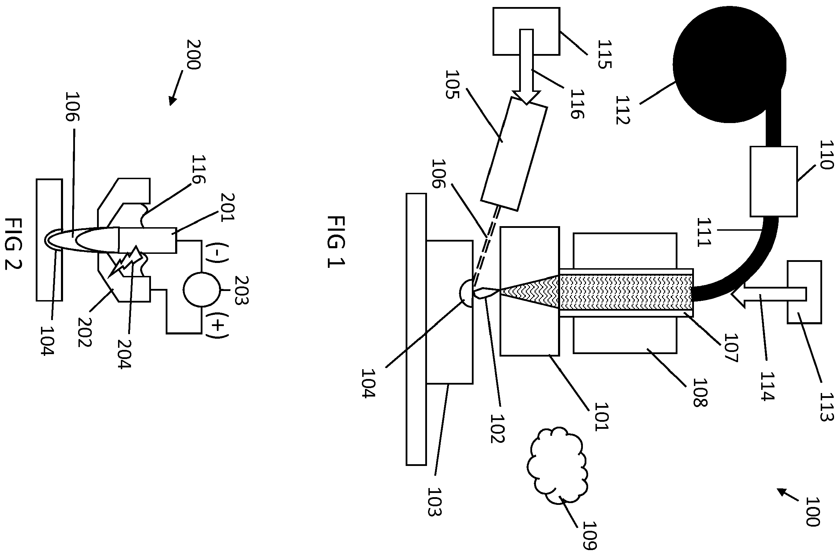

FIG 1 shows an exemplary device 100 in accordance with embodiments of the present invention. The device includes means 101 for extruding highly heat-conductive material such as metal in liquid or semi-fluid state, or extruding means 101, for short, which provide an extruded product 102 in liquid or semi-fluid state, which can be deposited on an underlying body 103 (which may be a previously built up body or a base, at the start of the manufacture process, when providing the first layer). The zone where the extruded product contacts the underlying region becomes a fusion zone.

The extruding means 101 may be combined with a driving system 113 to drive the material (e.g. metal) through an extrusion nozzle with enough force to extrude the material; for example the system may comprise gas at a controlled pressure (for example provided by a first gas pressure system). This allows extrusion with no moving parts in contact with the liquid metal, avoiding any clogging. However, the present invention is not limited thereto, and other systems can be used, such as an extrusion screw, or a piston. The extruding means 101 provide an extruded product 102 showing plastic flow properties. For example, the extruded product may be liquid or semi-liquid metal, for example at a temperature above its melting point. In some embodiments, the temperature of the extruded product just reaches the melting point. In some embodiments, the temperature is close to the melting point, or even below it so that the extruded product presents rheological properties and flowability. Preferably, the temperature of the extruded product surpasses the minimum temperature necessary to obtain complete fusion between the deposited material and the underlying body, e.g. minimum temperature to obtain a joint with a predetermined minimum strength.

The device further includes a plasma source 105 adapted to heat the underlying body 103 to a high temperature in a very small area (e.g. comparable to the contact area between the extruded product and the underlying body). In some embodiments of the present invention, the plasma source 105 may be a focused plasma jet source. Although the present invention may also use other plasma sources, for example a microplasma source, using a source which can produce a focused plasma jet is preferred because higher control is obtained regarding the placement and localization of the pre-heated region 104 on the underlying body 103. In some embodiments, a plurality of such sources can be used, distributed around the outlet of the extruding means 101, improving homogeneity of the heating. However, asymmetric incidence of plasma (for example, incidence by a single plasma source) may be also advantageous for pre-heating, as it is easier to place so it only pre-heats the area just in front of the deposited material, in the direction of the movement relative to the workpiece. Heating after depositing, for example with further plasma sources, could also improve fusion and/or allow initial thermal stress relief.

The one or more plasma jet sources 105 provide a plasma jet 106 focused on the underlying body 103, with an energy such that the underlying material is heated close to or at the melting temperature, or even slightly above the melting temperature of the underlying material, on a target region of the underlying body, which becomes a pre-heated region 104. In some embodiments, the plasma source 105 provides plasma with such energy that no melt pool is provided. In other embodiments, a melt pool is provided with a diameter smaller (e.g. less than 90%) than the minimum required printing resolution (e.g. lateral resolution),

In some embodiments the source 105 can provide a jet, e.g. a focused jet 106 so that the pre-heated region has approximately the same diameter as the cross-section of the extruded product. Outside this area, there may be a temperature gradient, and the temperature of the underlying body quickly drops far below the melting temperature depending on the thermal resistance of the underlying body (geometry, inertia, etc), especially if the material of the underlying body has high thermal conductivity (which is typically the case of metals). In some cases, the temperature drop can be proportional to the third power of the distance. For example, an area with a diameter equal to the extruded product may have a temperature between approximately 50°C below the melting temperature and the melting temperature.

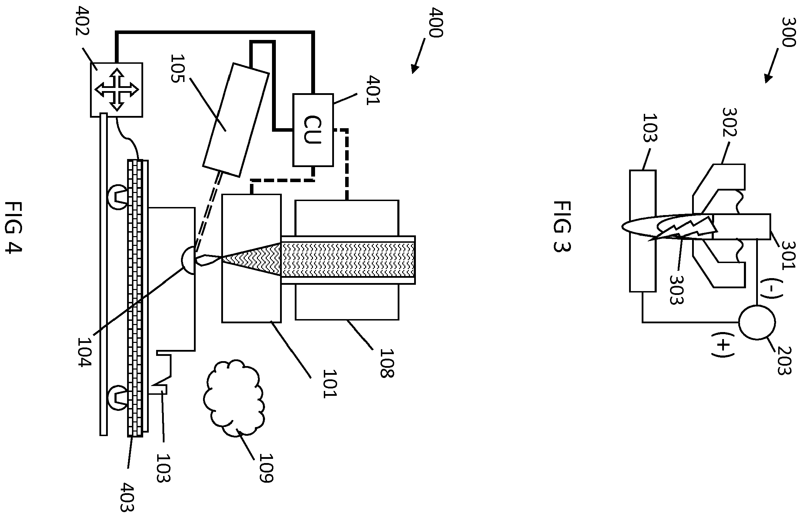

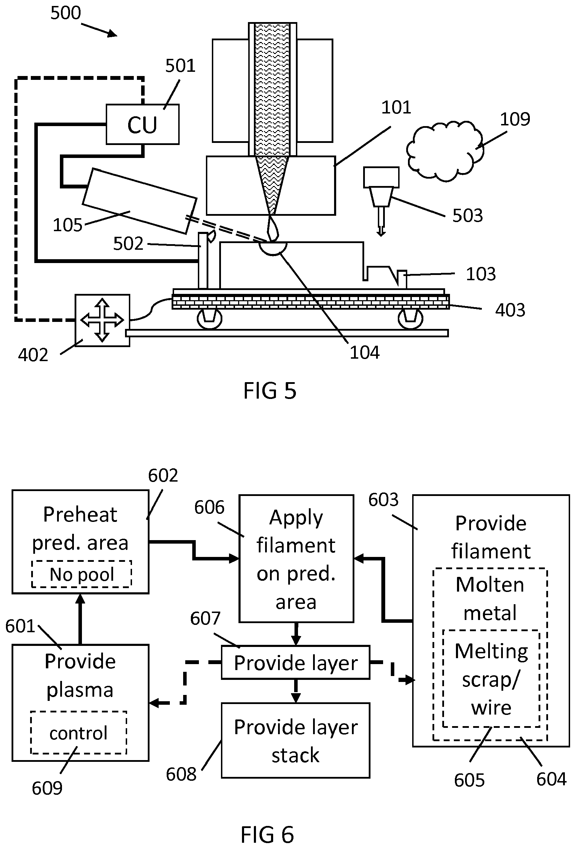

The pre-heated region 104 at a temperature near the melting temperature includes, or substantially coincides with, the fusion zone upon contact with the extruded product 102. However, it is preferable that the focused plasma jet 106 does not heat up the extruded product 102 while being deposited, or just after deposition, in order not to affect the fusion between the extruded product 102 and the underlying body 103. In some embodiments, the extrusion is provided continuously (except at the start of a layer), so the plasma jet cannot physically be at the same spot of deposition. Thus, the pre-heated region 104 is brought under the extruded product 102 being deposited by the extrusion means 101, or the extruded product 102 is brought over the pre-heated region, so the extruded product 102 is deposited on the pre-heated region 104, forming the fusion zone. Hence, the formation of pre-heated region precedes the deposition of the extruded product. This can be performed by physically moving the underlying body 103, which includes the pre-heated region 104, using for example a motion system 403 as shown in FIG 4 or 5. The path of the plasma jet 106, the height of the underlying body 103 (which may be adaptable by the motion system 403) and the deposition region may be arranged so that there may be a small distance (e.g. some milimetres) between the region where the extruded product 102 is deposited and the region 104 being pre-heated by the plasma jet 106. For example, the plasma jet tip could be in a range of 1 mm to 10 mm away from the pre-heated region; the outlet of the extrusion means may be placed at a distance to the underlying body equal to the thickness of a layer, up to 2 mm. However, the present invention is not limited thereto. For example, other distances can be used. For example, the relative motion of the different elements may be different, for instance the plasma source 105 may heat up the region 104, and then the extruding means 101 may be moved over the pre-heated region 104, while the position of the underlying body 103 is fixed. In yet alternative embodiments, both the underlying body 103 and the extruding means 101 may be moved, such that the extruded product 102 is not deposited on the region 104 being heated by the plasma jet 106. In some other embodiments, the focused plasma jet 106 is applied intermittently, for example the jet can be turned off during deposition, so it does not heat up the extruded product.

The fusion between extruded product 102 and the top layer of the underlying body 103 is provided by the heat transfer from the extruded product 102 to the underlying body. The temperature of the extruded product 102 may be the same or (in most cases, will be) higher than the temperature of the pre-heated region 104. Fusion is improved by the pre-heating provided by the focused jet 106, which compensates for the rapid loss of heat due to conduction, convection and radiation, upon contact of the extruded product 102 and the underlying body 103. The plasma may raise the temperature up to a value up to the melting temperature, for example 50°C under the melting temperature for the case of an extruded aluminum product at 750°C. However, the present invention is not limited thereto, meaning the temperature may be lower if the temperature of the extruded aluminum is higher. This compensation is done with no need of melting the underlying body 103, or with a melt pool no larger than the cross section of the extruded product 102 or required lateral resolution. The deposition can be localized with a minimum lateral resolution comparable to the size of the extruded product 102, rather than to the size of a melt pool, which is typically larger than the diameter of the extruded product (in some cases twice as large as the diameter of the extruded product, or even more), as shown in FIG 10.

In embodiments of the present invention, the extruded product 102 is a product made of or including molten or semi-molten metal, and the focused plasma heats the underlying body 103 to a temperature close to, but under, its melting point in an area similar to the area of the cross section of the extruded product 102 (or the average area of the cross section of the extruded product), so that there is no melt pool on the underlying body 103 before formation of the fusion zone upon contact of the extruded product 102 and the underlying body 103.

In some embodiments, the device includes a reservoir 107, which can hold molten material. The extruded product is obtained and extruded from the material in the reservoir 107. The reservoir 107 may include heating means 108 which can heat up material (e.g. metal) over the melting point. In some embodiments, the metal may be molten in a furnace, e.g. an induction furnace, or an electric arc furnace, from which the extruded product 102 can be directly extruded.

The device may be at least partially immersed in a conditioned environment 109, for example in an atmosphere of a gas chosen with regard to the type of material used, for protecting the extruded product 102, the underlying body 103 and/or the molten material in the reservoir 107. In some embodiments, inert gas is used. In particular embodiments, the atmosphere may comprise mainly Ar or N2 gas, which is commercially available.

In cases where the material to be deposited is metal, the device 100 in accordance with embodiments of the present invention has that advantage that metal may be provided in any form, such as in powder, granules, wire or in form of scrap. In some embodiments, the device may 100 include a feed system 110 for feeding material in the reservoir 107, before melting. For example, the feed system 110 may include a conveyor belt, or any other suitable mechanism. In some embodiments, as illustrated in FIG 1, the feed system 110 may feed metal wire 111 to the reservoir 107 from a wire spool 112, which is easy to feed and control. Moreover, wire spools are widely available and present no risk to health as feed material.

Other features, such as motors and motor controls, control of gas and material feeding, mechanical motion systems for the base and/or the extruder and plasma source may be included in the device (not pictured in FIG 1, but well known in the art). In particular embodiments, the heating means 108 may include control means for providing enough energy to melt a particular metal, and the plasma jet source 105 may include control means for providing plasma with enough energy to heat up the material of the underlying body 103 (e.g. the same metal as the one being deposited) at temperatures below the melting temperature, but high enough to improve fusion. The control may be automated and/or include a user interface for manual control and setup.

The device 100 in accordance with embodiments of the present invention does not necessarily require the use of powder, which is usually expensive and not readily available. The device allows reducing the costs of consumables, and it does not include a laser. This reduces the overall cost of the device, cost and difficulty of operation, need of expertise, and maintenance.

The device 100 may further include means for providing gas pressure in combination with other parts of the device. For example, a first gas pressure system can apply a first gas 114 to the reservoir 107 in combination with extrusion means 101, as a driving system 113, optionally enhancing the melting and/or extrusion, while a plasma gas pressure system 115 can provide a second gas 116 to the plasma source 105. All of these gases (gas in the conditioned environment 109, and/or the first and/or the second gas 114, 116) may be inert gases, in order to reduce chemical reactions such as e.g. oxidation of the body 103 or parts thereof, or of the extruded product 102. The gases may include different gases, or the same gas. For example, only argon can be used, which is widely available.

In some embodiments, the plasma source 105 may include a non-transferred plasma jet gun 200, shown in FIG 2. Such gun includes a plasma torch 201 and a nozzle 202. The torch 201 and the nozzle 202 may be connected to a voltage source 203 so that there is a potential difference therebetween. For example the plasma torch 201 may be a cathode and the nozzle 202 an anode. An electric current 204 arcs between the torch and the nozzle, heating the gas 116 and generating plasma inside the nozzle, which is released as the plasma jet 106, allowing very accurate focus onto the area where the extruded product will be deposited.

In other embodiments, the plasma source includes a focused transferred plasma jet gun. Such plasma gun 300, shown in FIG 3, includes a plasma torch 301 connected to a voltage source 203, so the plasma torch 301 acts as a cathode, respectively anode. The voltage source 203 is further connected to the underlying body 103, so it acts as anode, respectively cathode. In some embodiments, the source may include a nozzle 302 for controlling the gas exit. In this case, the electric current 303 arcs between the torch and the underlying body, and plasma can be provided at very high temperature safely, with less risk of damaging the nozzle or the torch, while the nozzle still allows controlled focusing of the plasma.

The channel of the plasma nozzle may be for example between 5 and 10 times longer than its diameter. It may be formed for example by a nozzle with an aperture of 1 mm. However, the present invention is not limited to these values, and other geometries can be used, allowing advantageously generating a fully developed flow, so that a straight, stable focused and symmetrical jet can be advantageously provided at the outflow.

In some embodiments, the lateral dimension of the pre-heated region 104 (at an average temperature close to the melting temperature of the underlying body) should e.g. not be larger than the desired resolution and not smaller than half of the lateral dimension of the cross sectional area of the extruded product (the lateral dimension defining the lateral resolution), in order to provide acceptable fusion. For sections where less resolution than the size of the nozzle diameter is required, the spacing between the nozzle 101 and workpiece 103 can be increased, resulting in a bigger extruded diameter, for example by providing a blob-like extruded product 104 which increases its lateral size as it separates from the outlet 120 of the extrusion means 101, as a result of surface tension.

Additionally, control of the fusion can be provided, for example by providing control of the temperature of the extruded product 102. Additionally, plasma control can optionally be included, for example by including control means, for controlling the temperature of the pre-heated zone. In general, control means allow tailoring the heat transfer and transformation of heat energy of the extruded product into fusion energy.

FIG 4 and FIG 5 show a setup in which a control means 401, 501 (e.g. a control unit, processing unit, etc.) is connected at least to the plasma source, for adjusting the power and/or focus of the plasma jet, thereby adjusting the heat transferred to the underlying body 103. The adjustment can be based on predictive algorithms including the 3D model of the object being manufactured, or it can be based on direct reading of parameters related to the fusion, for example measurement of temperature of the pre-heated region, and changes thereof. FIG 4 shows an example of the former, whereas FIG 5 shows an example of the latter.

In the particular device 400 of FIG 4, the control means 401 is connected to the plasma source 105 and to the control unit 402 of the motion system 403 for providing relative motion between the base and underlying body 103 and the extruding means 101. In some embodiments, the motion system 403 may be a translation system, which can provide motion within a plane for deposition of extruded product layers in a path, and motion perpendicular to that plane, for providing stacked layers. Translation may also include rotation. The control means 401 takes information regarding the geometry, thickness, amount of material needed for deposition, etc. from a 3D model of the body, which is used by the control unit 402 to control the path of the extruded products when depositing layers of extruded products. This information can be used to anticipate the heat required to locally raise the temperature of the underlying body 103 close to, but under, the melting temperature in the pre-heated region 104.

In some embodiments of the present invention, the control means 401 of the plasma source and the control unit 402 of the motion system 403 are integrated in the same module. For example, they may be the same unit. The one or more control units and control means in accordance with embodiments of the present invention may comprise controllers, processing units, lookup tables, etc.

The motion system 403 may include motors, transmission units, sliders, belts, etc. and it may provide movement of the extruding means 101, or of the underlying material 103 and its base, or of a combination of both, in the three axis of the space. The control means 401 obtains the information of the 3D model and it includes an algorithm, e.g. based on a model or on lookup tables, linking the amount and distribution of voxels (volume elements, analogous to pixels in a 2D image) of the 3D model with the required plasma power, for providing enough heat to the underlying body 103 to increase its temperature enough to soften the underlying material, or to reach the melting temperature but with limited or no melting, in the pre-heated region 104. The algorithm can take into account the thickness of the underlying body and its material, for example, which affects the heat conductivity locally. The algorithm may also take into account the melting temperature of the material (e.g. metal) being deposited and/or in the underlying body, temperature expected of the extruded product (e.g. taking into account heat loss during extrusion), mass flow rate, etc. Feedback can also be included by means of a sensor (not pictured in FIG 4), such as plasma current sensor, encoder, etc.

For example, a predetermined amount of power may be needed in order to reach just the melting temperature (or just below the melting temperature without surpassing it, in order to limit or avoid formation of melt pool) of a thick block of material extending few centimeters down and on the lateral X-Y directions, but only on a limited area thereof. This predetermined power will be higher than the power needed to obtain the same effect on a thin wall of the underlying body (e.g. reaching the maximum lateral resolution). The control means is able to adapt, with the predictive algorithm, the power of the plasma source in order to avoid formation of melt pools on the underlying body. Thus, the control means may vary the plasma power as the manufacture and layer addition advances, by taking into account the 3D model used by the device to build up the object in the algorithm. This is also explained with reference to FIG 9.

Optionally, the extruding means 101 and/or the furnace 108 may also receive instructions from the control means 401 for adapting the rate of extrusion and/or the temperature of the molten material in the reservoir and/or the temperature of the extruded product.

In the particular device 500 of FIG 5, the control means 501 is connected to the plasma source 105 and to at least one sensing means 502. In some embodiments, the sensing means 502 includes temperature sensing, which probes the temperature of the underlying body. For instance, one or more temperature sensors can be used for sensing the temperature of the underlying body 103 in at least the area where the extruded product 102 is deposited (at the fusion zone), optionally in the surrounding areas. For example, a pyrometer can be used, but also other types (IR sensors, etc.) can be used. However, the present invention is not limited thereto, and other sensing means 502 can be used, for example for obtaining a measure which can be related to the energy, such as a measure of temperature, or such as for example means for sensing viscosity or hardness of the extruded product and/or the underlying body and/or its pre-heated region, absorption, or any other parameter representative of the energy required to fuse the extruded product and the underlying body. In alternative embodiments, also mass and/or heat capacity of the underlying body 103 may be taken into account.

In some embodiments, the plasma jet source 105 can be set so its plasma jet 106 can provide energy to a predetermined region 104 of the underlying body 103 to increase its temperature, below the melting temperature of the material of the underlying body 103, but close to it. The sensing means 502 may read the temperature of the pre-heated zone 104 and send the measurement to the control means 501 which, upon detecting that the upper limit of the melting temperature is going to be reached, can control the plasma jet source 106 so the heat provided by the plasma jet is so as to not surpass the melting temperature, preferably not even reach it. Additionally, if the temperature measurements result in a temperature lower than a predetermined lower threshold, the control means 501 can control the plasma source 105 to increase the heat that the plasma jet 106 provides. This predetermined lower threshold may be the melting temperature, or it may be lower, e.g. estimated by look-up tables, and/or based on a thermal model and geometry of the underlying body obtained from the model of the product being manufactured, and/or the necessary energy to provide strong enough joints, depending on the materials and applications.

In an embodiment, the control means 501 controls the plasma power when a change of temperature behavior is detected. For example, when the temperature stops increasing during plasma application, it may be an indication that the heat provided by the plasma jet and the heat losses are in balance, so the control means 501 may keep the power constant or reduce the power so melting is limited or avoided, and/or vary other parameters, such as the speed of the deposition provided by the motion system and/or extruding means.

The embodiments shown in FIG 4 and FIG 5 may also be combinable. For example, the motion system 403 may receive instructions and information from the control means 501, for example for reducing or increasing the movement and speed so as to maintain constant the temperature as sensed by the sensing element 502. Optionally, the control means 501 may be programmed also to give instructions to extruding means 101 (and/or the furnace) for adapting the rate and temperature of extrusion, analogously to FIG 4.

For example, temperature measurements can be taken into account by the algorithm of the control means 401 of FIG 4, e.g. as an extra source of information and control. Thus, additionally to the feedback loop of the embodiment of FIG 5, the control means may include a predictive algorithm as in the control means of the embodiment of FIG 4, and the feedback loop and temperature measurement may be used as further check-up and further control.

In some embodiments, information regarding the material to be deposited can be introduced by a user, via a user interface, or by other means (e.g. extra measurements) in a control means. The algorithm may have access to a lookup table with melting temperatures for a list of materials, and/or to phase diagrams for compounds such as alloys. The control means then controls the plasma power, so the power of the plasma is reduced or increased in accordance with a predictive algorithm, or when the temperature sensing means measures a temperature close or at the melting temperature, or by combination of both.

In order to control the amount of heat that the plasma jet 106 provides, the control means can vary the energization of the plasma source 105. The specific way of doing this depends on the type of plasma gun used. For example, it can be done by control of distance between the gun and the underlying body. Focusing can be controlled also, but it is preferred a localized heating. It can also be done by control of voltage and/or current of the plasma, for example by control of the current between the electrodes, or of the amount of gas provided, or of the distance between the electrodes (e.g. the electrodes as shown in FIG 2 or FIG 3), etc.. For example, the plasma power may be controlled by controlling the electrode distance and can advantageously be used to startup the plasma in a controlled way. The distance can be increased in a controlled way while also increasing the current. Thus, a controllable plasma positioning and plasma energy is obtained from the beginning. Standard plasma generating devices (such as commercial plasma cutters and welders) use HF (High Frequency) or touch start principle, which are not in favor for mainly with respect to electromagnetic interference. Blowback principles are also use in commercial devices. These have a less controlled startup (and it can be hard difficult to control only little plasma power is required) but it is possible to use these as well in the present invention. Combination of (change in electrode distance and current) gives additional flexibility

The accuracy of the manufacturing and shaping can be improved by adding milling techniques, allowing obtaining smoother surfaces and more defined corners. Use of milling techniques is usually difficult to integrate with typical metal printing systems, for example in case of powder systems; however, in embodiments of the present invention, the strength of the joint is high enough, even right after deposition, so as to allow combining FFD with milling techniques. For example, as shown in FIG 5, the device may include a mill 503 integrated in the device, e.g. within the conditioned environment 109. These additive manufacturing techniques can be combined with subtractive manufacturing techniques. Design flexibility improves, and production costs can be reduced.

The device of the present invention provides additive manufacturing of bodies and pieces containing metals typically difficult to use in this kind of technology. For example, aluminum is a very interesting material in industry, due to its high strength/weight ratio, relatively easy recycling and processing and availability. However, additive manufacturing using lasers is difficult to perform on aluminum, because of its low absorbance. The present invention allows a fast manufacture with good resolution, taking advantage of its relatively low melting point. The device may include heating means 108 providing temperatures over 660°C, and a plasma source 105 which provides an energy sufficient to increase the temperature of aluminum up to the melting temperature (550°C-660°C depending on the used alloy, for example at least 540°C (depending on the alloy, in an area of at most 1.5mm², depending on the requested resolution).

However, the use or application of the device in accordance with embodiments of the present invention is not limited to aluminum, and it can be used to provide additive manufacturing of bodies including any other highly heat-conductive material, in particular other metals, either pure or mixed with other elements; for example it can be used with steel and steel alloys, stainless steel and alloys thereof, brass, copper, titanium, etc. Moreover, the present invention is not limited to metals. Ceramics, polymers and such can also be used.

In a second aspect, the present invention relates to a method for additive manufacturing, specifically FFD, including locally pre-heating an area of the underlying body, to an average temperature just below the melting temperature of the underlying body (e.g. below the melting temperature of the material, e.g. metal, forming the underlying body), and providing an extruded product of liquid or semi-liquid material, where the contact area between the underlying body and the extruded product has substantially the same area as the area which is pre-heated. The pre-heating can be done by means of plasma. One or more focused plasma jets can provide such small area, the present invention not being limited thereto. Typically, the deposited extruded product and the underlying body comprise or are composed of the same material (e.g. the same metal), but the present invention is not limited thereto. The method is adapted so that the extruded product is preferably not heated during deposition or right thereafter, only the region of the underlying body where the extruded product will be deposited is pre-heated.

FIG 6 shows the steps of an exemplary method of the present invention. The method includes providing 601 a plasma plume, forming a focused plasma jet, for pre-heating 602 a predetermined area (pre-heated region 104) to an average temperature preferably close to, but under, the melting temperature of the underlying body 103. The area of the pre-heated region 104 may be comparable to the area of contact between the deposited extruded product and the underlying body (fusion zone).

The method includes providing 603 an extruded product, for example a filament-shaped, or blob-shaped product of flowable material, e.g. molten metal, for performing deposition. This may include a pre-step of providing 604 molten material (e.g. metal). Deposition of material by extruding a product of said material has the advantage that it is faster than, for example, deposition by droplets, while being still possible to provide accurate deposition. Additionally, it does not need extra steps (such as sintering or curing) after formation of the body, avoiding shrinkage effects for example.

The step of providing 604 molten metal may include providing and melting 605 scrap metal, or wire, but the present invention may use any other source of metal such as powder, granules, etc.

The method includes applying or depositing 606 the extruded product on the predetermined area subsequently to pre-heating 602. For example, the extruded product 102 may be deposited while the plasma jet 106 is turned off. In other embodiments, continuous extrusion and deposition is provided, the plasma is provided on a target region, which thus becomes the pre-heated region 104, and the motion system 403 brings the pre-heated region 104 to the location where the extruded product 102 and the underlying body 103 will contact while a further target region is provided for heating to the plasma, thus advancing the heating of the underlying body and subsequent deposition; or vice-versa, the system 403 brings the extruded product 102 to the pre-heated region 104 while the plasma advances to a further target region.

The method comprises providing 607 a layer, thereby forming a further layer of the underlying body, for example by two-dimensional movement provided by the motion system 403. The stacking may be provided by known methods, for example the motion system may move the underlying body away from the extrusion means a predetermined distance (e.g. depending on the diameter of the extruded product, orientation, etc.), and providing the further layer. The method is repeated until, finally, the method provides 608 a final layer stack.

Other, optional, steps may be carried out, such as intermediate or final milling, or heat treatment for heat stress relief to obtain the desired (metallurgical) properties, depending on the application.

In some embodiments, providing 601 plasma comprises controlling 609 said plasma, in order to avoid overheating and forming a melt pool on the underlying body.

In general, the method of the present invention can be combined with standard software. For example, a readable 3D file of the object to be printed can be provided (e.g. an STL-file). A control means 401, 402, 501 (either external or the same as the control unit 401, 402 that regulates the motion system for providing printing operation) as shown in FIG 4 or 5 may include a plasma control algorithm, which may be based on a model or look-up table, based on sensor input (e.g. temperature sensing input), or both. For example, the algorithm may include a relationship between the amount of neighbor voxels, wall thickness and the required plasma power, based on experiments and/ or theoretical models. The control unit or units may include a slicer software, for generation of numerical control codes of the controller of the machine (e.g. G-codes). In some embodiments of the present invention, the slicer software may include additional parameters such as temperatures, extrusion mass flow rate, and/or plasma power.

The control unit, or optionally, a controller of the motion system, may provide translation of the numerical control codes from the slicer software (e.g. the G-codes) to motor commands, and also taking into account the plasma power required. If the plasma power required is high (respectively low), the motion may be slower (respectively faster), and the mass flow rate lower (respectively higher), for example. Further, control of the mass of the extruded product, and/or of its temperature; may be provided.

Additionally or optionally, temperature sensing may be included, forming a closed loop of control of gas flow, plasma power, mass flow rate, etc.

The controller may provide control of the motor drivers of the motion system, of the plasma drivers and gas valves, etc. Sensor feedback may be included also, for adapting the commands of the controller if necessary.

In general, extra parameters in the codes can be added to the slicer software in accordance with embodiments of the present intention. These parameters include temperature, melting temperature, plasma power and mass flow rate of the extruded product. These parameters can determined by models, experimentally, in a lookup table, etc.

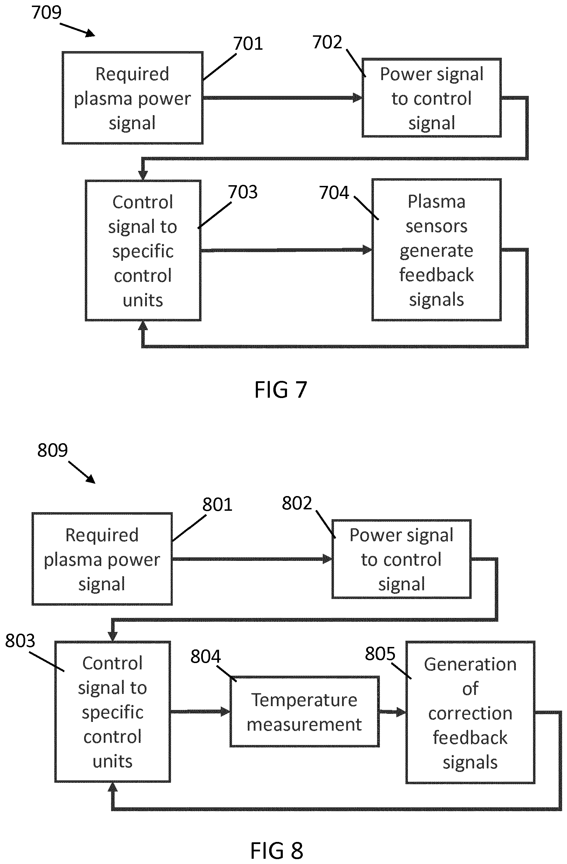

FIG 7 shows an exemplary method of controlling 709 the plasma, with no temperature measurement requirement. First, the required plasma power signal is determined 701, and sent to the control means (which may be integrated in the controller 402 of the motion system, as explained above). The required plasma power is the power necessary to increase the temperature close to, but under, the melting temperature of the material forming the underlying body. Then, based on calibration/modeling, the plasma power signal is translated 702 into control signals for actual control of the plasma source 105, for example by varying the electrode distance (and plasma current), although any other method can be used. The control signals are sent 703 to a specific control unit or units, for example to dedicated control units (e.g. for control of the electrode distance) in the source 105. Further encoders and sensors for sensing plasma power generate 704 feedback signals for the specific control unit or units in the source 105 or the control unit 401, 501. For example, a position encoder for electrode distance, and/or current sensor(s) provide feedback to the specific control units.

FIG 8 shows another exemplary method of controlling 809 the plasma, including temperature measurement. The required plasma power signal is determined 801 and sent to the control unit 501; then the power signal is translated 802 into a control signal, which is sent 803 to a specific control unit or units, for example to dedicated control units (e.g. for control of the electrode distance) of the source 105 analogously to the previous case. However, in this case, the temperature is measured 804 in at least the spot (fusion zone) where the extruded product will be deposited, e.g. using sensing means 502. The temperature can be measured with a pyrometer or an IR sensor, for example. Then, the temperature measurements are translated 805 to a correction feedback signal (for example, the translation may take place in the control means itself). Then the control unit 501, or the specific control unit or units in the source 105, correct the power based on real time temperature measurements, for example by changing the electrode distance and plasma current.

FIG 9 shows another exemplary method of controlling 909 the plasma, by predictive methods. The method includes obtaining 901 voxel and geometric information of the 3D model of the body, thus retrieving 902 information regarding the underlying body, from a software file used to control the motion of the system. The method also includes obtaining information (melting temperature, viscosity, etc.) regarding the material of the underlying body, and/or the material to be deposited. This may include selecting the materials from a lookup table, for instance. This method allows predicting how much heat is necessary to increase the temperature, but avoiding melt pool, on a region of the underlying body, in real time. Thus, the required plasma can be provided 904. The plasma jet can be controlled in accordance with any of the methods shown before.

The methods shown in FIG 7, 8 and 9 are not mutually exclusive, and may be combined. For example, the step of obtaining 701, 801 the required plasma signal can include the method described with reference to FIG 9.

The control of the temperature of the extruded product, the temperature of the pre-heated region, the flow of mass, deposition speed, and other parameters may be chosen with respect to the material being deposited and the material of the underlying body, for improving (e.g. optimizing) fusion quality. For example, the temperature of the extruded product may surpass its melting temperature (so a liquid product is provided), while the plasma provides a pre-heated region at a temperature under melting temperature, so no molten pool is provided, or locally at a temperature slightly above the melting temperature, for limiting the melt pool to a size not larger than desired resolution.

FIG 12 shows the cross section of a deposited extruded product 102 joint to an underlying body 103. The lateral resolution is compared with the cross section of the contact zone between the deposited extruded product 102 and the underlying body 103, and the cross section of the fusion zone, where the actual fusion takes place between the deposited product 102 and the underlying body 103. In preferred embodiments, the parametric control is such that the lateral resolution, the cross section of the contact zone and the cross section of the fusion zone are the same.

In some embodiments, the method may include a step of milling any of the intermediate layers or layer stack. It is advantageous that milling may be provided as an intermediate step, during deposition, improving flexibility of design.

The present invention has applications extending, but not limiting to, prototyping of metallic products, series production of complicated lightweight components (thanks to the enablement of additive manufacturing of light metals such as aluminum), metallurgical engineering, or engine and thrust design and even zero-gravity applications.

## Claims

1. A device (100, 400, 500) for additive manufacturing, the device comprising
- means (101) for extruding material in flowable state, for depositing an extruded product (102) on an underlying body (103),
- at least one plasma source (105) for providing at least one plasma jet (106) to a target region of the underlying body (103), for obtaining a pre-heated region (104),
wherein the device (100, 400, 500) is arranged so that the at least one plasma source (105) provides the at least one plasma jet (106) only to the target region of the underlying body (103) and the means (101) for extruding material is adapted for depositing an extruded product (102) on the pre-heated region (104) of the underlying body (103), for enhancing fusion between the underlying body and the extruded product.

2. The device (100, 400, 500) of the previous claim, wherein the plasma source (105) is a focused plasma jet source for providing a focused plasma jet.

3. The device (100, 400, 500) of any one of the previous claims, further comprising a reservoir (107) including heating means (108) for melting material for extrusion.

4. The device (100, 400, 500) of any one of the previous claims, wherein the means (101) for extruding material is adapted to deposit the extruded product (102) on a region physically separated from the region where at least one plasma source (105) provides the plasma jet (106), the device (100, 400, 500) further including a motion system (403) for providing the pre-heated region (104) to a location where the means (101) for extruding material deposits the extruded product (102).

5. The device of any one of the previous claims, further comprising control means (401, 501) for controlling the at least one plasma source (105) for regulating the temperature of the pre-heated region (104) provided by the at least one plasma jet (106).

6. The device of claim 5, further comprising a sensing means (502) for measuring a parameter related to the fusion energy, and the control means (501) further comprising a feedback loop for controlling the plasma jet source (105) for adapting at least the temperature of the pre-heated region (104), based on the measurement of the sensing means (502).

7. The device of any of claims 5 or 6, wherein the controlling means (401, 501) further includes an algorithm for controlling the plasma source (105), based at least on two of:
- the relation between the amount and distribution of voxels in the volume neighbouring the fusion zone,
- the value of the melting temperature of the material, and
- the object build rate
for limiting the pre-heated region (104) to an area similar to the contact area between the extruded product (102) and the underlying body (103).

8. A method of performing additive manufacturing comprising the steps of:
- extruding material in a flowable state, thereby forming (603) an extruded product (102),
- providing (601) at least one plasma jet (106) on a target region of an underlying body (103), thus forming a pre-heated region (104) on the underlying body (103),
- depositing (606) the extruded product (102) on the pre-heated region (104) of the underlying body (103), thereby fusing the extruded product (102) with the underlying body (103),
wherein providing (601) at least one plasma jet (106) comprises removing the plasma jet (106) from the pre-heated region (104) before depositing the extruded product (102), for enhancing fusion between the underlying body (103) and the extruded product (102).

9. The method of claim 8, wherein providing (601) at least one plasma jet comprises contacting the electrodes of a plasma source, forming a plasma arc, by separating the electrodes, thereby forming a plasma jet.

10. The method of claim 9 or 10, wherein providing (601) at least one plasma jet (106) on a target region of an underlying body (103) comprises providing (601) at least one plasma jet (106) for locally raising the temperature of the underlying body (103) at the pre-heated region (104) to an average temperature close to or up to the melting temperature of the material of the underlying body (103).

11. The method of any of claims 8 to 10, further comprising measuring (804) parameter related to the fusion energy at the pre-heated region (104) and controlling (805) at least the plasma jet (106) taking into account the results of the measurement at or near the pre-heated region (104) for maintaining the average temperature of the pre-heated region (104) at or below melting temperature.

12. The method of any of claims 8 to 11, further comprising
- obtaining (901) voxel and geometric information of the underlying body (103),
- obtaining (903) information regarding the melting temperature of the underlying body (103) and the temperature of the extruded material (102), and
- controlling (609, 709, 809) the plasma jet (106) thereby adapting the heat transfer taking into account the voxel and geometric information of the underlying body (103), for maintaining the average temperature of the pre-heated region (104) at or below the melting temperature for reducing the melt pool to a width comparable to or smaller than the required lateral resolution, or for avoiding the presence of a melt pool.

13. The method of any of claims 8 to 12, wherein extruding material comprises extruding aluminium thereby providing an aluminium extruded product.

14. The method of any of claims 8 to 13, wherein providing (601) at least one plasma jet comprises providing (601) a plasma jet thereby forming the pre-heated zone, preceding depositing (606) the extruded product on the pre-heated zone.

15. The method of claim 14, wherein providing (601) a plasma jet preceding depositing (606) the extruded product (104) further comprises providing continuous relative movement between the underlying body (103) and the plasma jet.
